**Europäisches Patentamt**

**European Patent Office**

**Office européen des brevets**

(19)

(11) Veröffentlichungsnummer : **0 319 783 B1**

# EUROPÄISCHE PATENTSCHRIFT

(12)

(45) Veröffentlichungstag der Patentschrift :
**29.01.92 Patentblatt 92/05**

(51) Int. Cl.$^5$ : **D01H 1/06**

(21) Anmeldenummer : **88119560.6**

(22) Anmeldetag : **24.11.88**

(54) **Spinnvorrichtung.**

Teilanmeldung 91104582.1 eingereicht am 24/11/88.

(30) Priorität : **08.12.87 DE 3741430**

(43) Veröffentlichungstag der Anmeldung :
**14.06.89 Patentblatt 89/24**

(45) Bekanntmachung des Hinweises auf die Patenterteilung :
**29.01.92 Patentblatt 92/05**

(84) Benannte Vertragsstaaten :
**CH DE FR IT LI**

(56) Entgegenhaltungen :
DE-A- 3 400 327
GB-A- 2 088 907

(73) Patentinhaber : **Zinser Textilmaschinen GmbH
Hans-Zinser-Strasse Postfach 1480
W-7333 Ebersbach/Fils (DE)**

(72) Erfinder : **Grau, Gerhard, Dipl.-Ing.
Hohlenmatten 18
W-7840 Müllheim 13 (DE)**
Erfinder : **Derichs, Josef, Dr.-Ing.
Bonhoefferstrasse 12
W-4050 Mönchengladbach (DE)**

(74) Vertreter : **Dauster, Hanjörg, Dipl.-Ing. et al
WILHELM & DAUSTER Patentanwälte
Hospitalstrasse 8
W-7000 Stuttgart 1 (DE)**

EP 0 319 783 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Spinnvorrichtung mit einer eine Spule aufnehmenden, von einem Einzelmotor angetriebenen Spindel und mit einer die Spule übergreifenden, über ihren unteren Rand das ersponnene Garn auf die Spule aufwindenden Glocke, die ebenfalls mit einem Einzelmotor angetrieben ist.

Es ist bekannt (DE-A 3400327), daß bei einer Spinnvorrichtung der eingangs genannten Art es in manchen Fällen erforderlich oder wenigstens vorteilhaft sein kann, insbesondere bei sehr feinen und wenig zugfesten Fäden, wenn die Glocke mit einem eigenen Antriebsmotor angetrieben wird, der zumindest eine Grundlast der Antriebsleistung übernimmt. Das ersponnene Garn muß dann nur noch eine relativ geringe Antriebsleistung aufbringen, mit der die Glocke auf die Aufwindegeschwindigkeit mitgeschleppt wird. Die Drehzahl der Glocke ist geringer als diejenige der Spindel und unterliegt darüber hinaus noch Drehzahlschwankungen, da sich die Drehzahl der Glocke abhängig von dem Durchmesser der Spule ändert, auf welchen das ersponnene Garn gerade aufgewickelt wird.

Der Erfindung liegt die Aufgabe zugrunde, eine Spinnvorrichtung der eingangs genannten Art bezüglich ihres Antriebs so auszubilden, daß die gewünschten Drehzahlen mit relativ geringem Aufwand an Steuereinrichtungen realisiert werden können.

Diese Aufgabe wird dadurch gelöst, daß die beiden Einzelmotoren an eine gemeinsame Frequenzsteuereinrichtung angeschlossen sind, und daß die Drehmoment-Kennlinie des Einzelmotors der Glocke, der ein Asynchronmotor ist, derart auf die Lastmoment-Kennlinie der Glocke abgestimmt ist, daß bei gleicher Speisefrequenz für den Einzelmotor der Spindel und für den Einzelmotor der Glocke der Einzelmotor der Glocke mit einer Drehzahl angetrieben ist, die kleiner als die für den Aufwindevorgang des Garnes benötigte Drehzahl ist.

Bei dieser Ausbildung muß das ersponnene Garn nur die Glocke von der Drehzahl, mit der sie angetrieben ist, auf die Aufwindedrehzahl mitschleppen. Der zum Antrieb der Glocke benutzte Asynchronmotor ist so ausgelegt, daß der eine "weiche" Drehmoment-Drehzahlkennlinie aufweist, d.h. eine mit einem flachen Verlauf. Dadurch wird erreicht, daß die beiden Einzelmotoren mit der gleichen Frequenz gespeist werden können, während dennoch der Einzelmotor der Glocke mit einer Drehzahldifferenz hinter der Spindeldrehzahl zurückbleibt, die für den Aufwindevorgarn des Fadens erforderlich ist. Der Einzelmotor der Spindel kann ein Asynchronmotor oder auch ein Synchronmotor sein.

In weiterer Ausgestaltung der Erfindung sind Mittel vorgesehen, um die Drehmoment-Kennlinie des Einzelmotors der Glocke abhängig von den Aufwindeverhältnissen zu steuern. Durch diese Ausbildung ist es möglich, die Fadenspannung während des Aufwindens konstant zu halten, auch wenn sich des Aufwindemoment und die Drehzahl der Glocke ändern.

In Ausgestaltung der Erfindung wird vorgesehen, daß der Einzelmotor der Glocke über eine Umschalteinrichtung direkt oder über Mittel zum Abstimmen der Drehmomenten-Drehzahl-Kennlinie mit der Frequenzsteuerung verbindbar ist. Dadurch ist es möglich, den Einzelmotor der Glocke auf eine "harte" Drehmoment-Drehzahl Kennlinie umzuschalten. Dies wird insbesondere ausgenutzt, um bei einem Anfahren die Glocke möglichst schnell auf die Betriebsdrehzahl hochzufahren.

In weiterer Ausgestaltung der Erfindung wird vorgesehen, daß zum Stillsetzen die Einzelmotoren der Spindel und der Glocke über Umschalteinrichtungen unter Umgehen der Frequenzsteuereinrichtung an eine Gleichstromversorgung anschließbar sind.

Wie schon erwähnt wurde, ändern sich bei konstanter Spindeldrehzahl die Aufwindeverhältnisse und insbesondere das Aufwindemoment bei der Erzeugung eines in üblicher Weise aufgebauten Spinnkops in Abhängigkeit von dem jeweiligen Durchmesser, mit welchem die Aufwindung erfolgt. Bei großen Aufwindedurchmessern muß entsprechend die Glocke schneller rotieren als bei kleinen Durchmessern. Bei einem Übergang von einem großen Aufwickeldurchmesser zu kleineren Aufwickeldurchmessern besteht außerdem die Gefahr, daß die Glocke aufgrund ihrer Massenträgheit zunächst etwas voreilt, wodurch die Fadenspannung unter Umständen auf ein unzulässiges Maß reduziert wird. Um diesen Einfluß der Massenträgheit der Glocke etwas zu korrigieren ist es bekannt (DE-A 3400327) eine ständig wirksame Bremseinrichtung für die Glocke vorzusehen. Dies führt einerseits zu einem erhöhten Leistungsbedarf während andererseits unter Umständen erhebliche Schwankungen in der Fadenspannung bestehen bleiben. Um die Aufwindeverhältnisse und insbesondere die Fadenspannungsschwankungen zu vergleichmäßigen oder wenigstens zu glätten ist die Glocke mit einer periodisch einschaltbaren Bremseinrichtung versehen. Durch eine derartige Bremseinrichtung kann der Einfluß der Massenträgheit der Glocke bei dem Übergang von großen Aufwindedurchmessern zu kleineren Aufwindedurchmessern gedämpft oder nahezu vollständig eliminiert werden. Als Bremseinrichtung können praktisch alle bekannten Bremselemente zum Einsatz kommen, sofern sie schaltbar und zweckmäßigerweise auch in ihrer Bremswirkung einstellbar sind. Beispielsweise ist es möglich, elektrische Bremseinrichtungen, beispielsweise Wirbelstrombremsen, oder auch Magnetbremsen oder mechanische Bremsen oder pneumatische Bremsen vorzusehen. Um Spitzen in der Fadenspannung abzuschleifen oder zu glätten ist es zweckmäßig, wenn die Bremseinrichtung entsprechend phasenverschoben ein- und ausgeschaltet wird.

In weiterer Ausgestaltung der Erfindung wird vorgesehen, daß die Bremseinrichtung in Abhängigkeit von den Aufwindeverhältnissen ein- und ausschaltbar und/oder in ihrer Bremswirkung veränderbar ist. Das Aufwindemoment kann über die Fadenspannung direkt gemessen oder insbesondere indirekt über die Position und die Bewegungsrichtung des anhebbaren und absenkbaren Bauteils, d.h. der Glocke oder der Spindel, ermittelt werden.

In weiterer Ausgestaltung der Erfindung wird vorgesehen, daß die Bremseinrichtung in Abhängigkeit von der Fadenspannung ein-und ausschaltbar und/oder in der Bremswirkung veränderbar ist. Dies kann nach einem vorgegebenen Programm als ein Steuervorgang oder aber auch unter Erfassung der jeweils vorhandenen Fadenspannung als ein Regelvorgang durchgeführt werden.

Weitere Merkmale und Vorteile der Erfindung ergeben sich aus der nachfolgenden Beschreibung der in der Zeichnung dargestellten Ausführungsform und den Erläuterungen anhand von Diagrammen.

Fig. 1    zeigt eine schematische Darstellung einer einzelnen Spinnvorrichtung,

Fig. 2    in einem Diagramm die Drehzahlen der Spindel und der Glocke über der Zeit,

Fig. 3    in einem Diagramm die Drehmoment-Kennlinien der Einzelmotoren der Spindel und der Glocke sowie die Lastmoment-Kennlinien der Spindel und der Glocke und

Fig. 4    ein schematisches Schaltbild für eine Steuerung der Einzelmotoren der Glocke und der Spindel, wobei unterschiedliche Betriebszustände berücksichtigt werden.

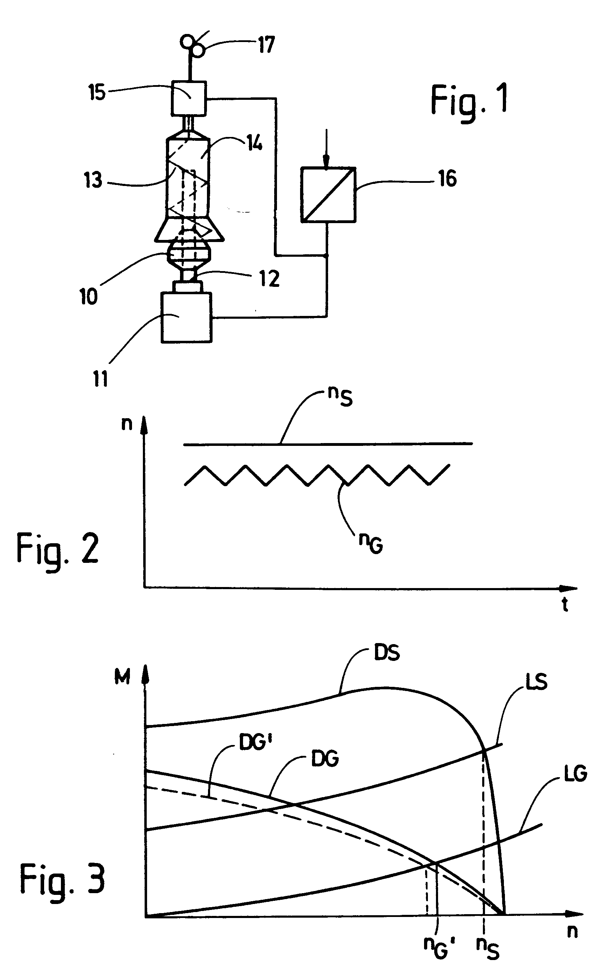

In der Fig. 1 ist nur eine einzelne Spinnvorrichtung dargestellt. Eine Spinnmaschine besteht aus einer Vielzahl derartiger Spinnvorrichtungen, die auf einer oder zwei Maschinenseiten in einer Reihe nebeneinander angeordnet sind. Die Spinnvorrichtung enthält eine Spindel (12), die von einem Einzelmotor (11) angetrieben ist, für den ein Asynchronmotor verwendet wird. Auf die Spindel (12) ist eine Spulenhülse aufgesteckt, auf die eine Spule (10) aus Garn aufgewunden wird.

Die Spule (10) wird von einer koaxial zur Spindel (12) angeordneten Glocke (14) übergriffen, die ebenfalls von einem Einzelmotor (15) angetrieben wird. Dieser Einzelmotor (15) ist als ein Asynchronmotor ausgeführt. Die Glocke (13) besitzt einen koaxial zur Spindel (12) verlaufenden Fadenzuführkanal, der unterhalb des Einzelmotors (15) nach außen zu dem Glockenmantel geführt ist, auf welchem dann das Garn (13) in Spiralen zu dem unteren Rand der Glocke (14) läuft. Das Garn (13) wird über den unteren Rand der Glocke (14) auf die Spule (10) aufgewunden. Die Glocke (14) oder die Spindel wird in nicht dargestellter Weise zu einer Hubbewegung angetrieben, die der üblichen Hubbewegung an der Ringspinnmaschine entspricht und die dort in der Regel von der Ringbank durchgeführt wird. Dadurch wird eine Spinnspule (10) mit üblichem Aufbau erzeugt. Das zu verspinnende Fadenmaterial wird dem Zuführkanal der Glocke (14) über ein Streckwerk zugeführt, von welchem das Lieferwalzenpaar (17) angedeutet ist.

Wie in dem Diagramm in Fig. 2 dargestellt ist, läuft die Spindel (12) mit konstanter Spindeldrehzahl (ns). Die Glocke (14) läuft mit einer etwas geringeren Drehzahl (ng), die der Aufwickelgeschwindigkeit entspricht. Abhängig von dem jeweiligen Aufwickeldurchmesser auf der Spule (10) ändert sich dabei das Aufwickelmoment und damit auch die Glockendrehzahl (ng), wie dies ebenfalls in Fig. 2 dargestellt ist. Die Glocke (14) wird somit regelmäßig zwischen einer minimalen Drehzahl und einer maximalen Drehzahl beschleunigt und verlangsamt.

Wie in Fig. 1 angedeutet ist, werden die beiden Einzelmotoren (11, 15) durch eine gemeinsame Frequenzsteuereinrichtung (16) gesteuert. Die nur für eine Spinnvorrichtung dargestellte Frequenzsteuereinrichtung steuert natürlich bei einer praktischen Maschine eine Vielzahl oder alle Einzelmotoren (11, 15) der Spinnstellen. Um dabei die gewünschten, in Fig. 2 dargestellten Spindeldrehzahlen (ns) und Glockendrehzahlen (ng) zu erhalten, ist der Einzelmotor (15) der Glocke (14) so ausgelegt worden, wie es nachstehend mit Hilfe des Diagramms der Fig. 3 erläutert wird.

Der Einzelmotor (11) der Spindel ist in üblicher Weise ausgelegt, so daß er die allgemein übliche Form einer Drehmoment-Kennlinie (DS) aufweist. In das Diagramm nach Fig. 3 ist außerdem die Lastmoment-Kennlinie (LS) der Spindel (12) eingezeichnet. Der Schnittpunkt zwischen der Drehmoment-Kennlinie (DS) und der Lastmoment-Kennlinie (LS) ergibt die Spindeldrehzahl (NS). Der Einzelmotor (15) der Glocke (14) ist dagegen mit einer "weichen" Drehmoment-Kennlinie (DG) ausgelegt worden, d.h. mit einer Kennlinie mit flacher Neigung. Die beiden Motoren besitzen die gleiche Synchrondrehzahl. Die ebenfalls in das Diagramm nach Fig. 3 eingezeichnete Lastmoment-Kennlinie (LG) der Glocke (14) hat einen Schnittpunkt mit der Drehmoment-Kennlinie des Einzelmotors (15) der Glocke (14), der die Drehzahl (ng') ergibt, zu.welcher die Glocke (14) mittels dieses Einzelmotors (15) angetrieben wird. Die tatsächliche Drehzahl (ng) der Glocke (14) liegt etwas hoher, da sie zu dieser Drehzahl von dem Garn (13) geschleppt wird. Aufgrund der Auslegung der Drehmoment-Kennlinie (DG) des Einzelmotors (15) der Glocke (14) ist es möglich, die beiden Einzelmotoren (11, 15) mit der gleichen Speisefrequenz zu betreiben und dennoch unterschiedliche Drehzahlen zu verwirklichen.

Um bei jeder Glockendrehzahl (ng) das Garn (13) mit gleicher Spannung auf die Spule (10) aufwickeln zu können, wird in weiterer Ausgestaltung vorgesehen, daß die Drehmoment-Kennlinie (DG) des Einzelmotors (15) der Glocke (14) entsprechend den Aufwindeverhältnissen verändert wird, ohne daß jedoch die Synchrondrehzahl geändert wird. Dies kann beispielsweise dadurch geschehen, daß ein oder mehrere Widerstände in den Läuferkreis des Asynchronmotors eingebaut werden, die abhängig von der Hubbewegung d.h. Position und Bewegungsrichtung der Glocke (14) oder der Spindel (12) zugeschaltet oder ausgeschaltet werden. Es ergibt sich dann ein Drehmoment-Kennlinien-Bereich, der zwischen den Kurven (DG und DG′) in Fig. 3 angedeutet ist, dem dann entsprechend ein Bereich von Glockendrehzahlen (ng′) zugeordnet ist, zu der die Glocke (14) mittels ihres Einzelmotors (15) angetrieben wird.

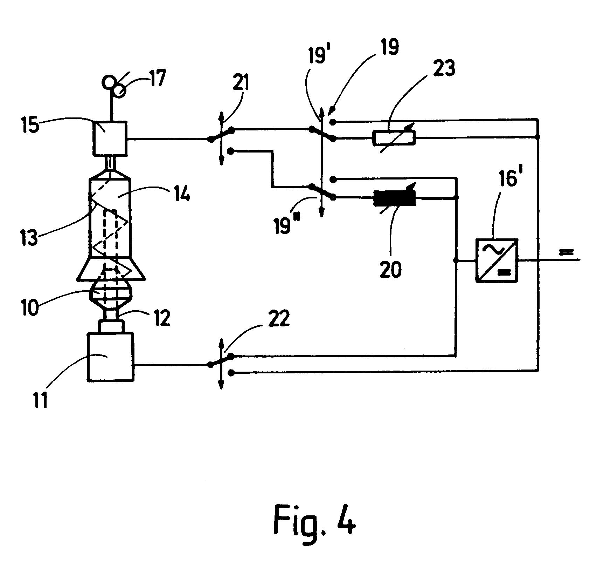

Die in Fig. 4 dargestellte Spinnvorrichtung entspricht der Spinnvorrichtung nach Fig. 1, d.h. eine Spindel (12) ist mit einem als Asynchronmotor ausgebildeten Einzelmotor (11) und eine Glocke (14) mit einem ebenfalls als Asynchronmotor ausgebildeten Einzelmotor (15) angetrieben. Die Einzelmotoren (11, 15) dieser Spinnvorrichtung (ebenso wie die Einzelmotoren aller Spinnvorrichtungen einer Maschine) sind an eine Frequenzsteuereinrichtung (16′) angeschlossen, die ihrerseits an eine Gleichstromversorgung angeschlossen ist. Die Einzelmotoren (11, 15) sind über Umschalter (21, 22) außerdem direkt an die Gleichstromversorgung anschließbar. Dadurch ist es möglich, die Einzelmotoren (11, 15) zu bremsen. In der Versorgung des Einzelmotors (15) liegt noch ein weiterer Umschalter (19), der zwei gleichzeitig schaltende Schaltelemente (19′, 19″) aufweist. Das Schaltelement (19″) schaltet zwischen zwei parallelen, zu der Frequenzsteuereinrichtung (16′) führenden Leitungen, von denen eine eine einstellbare Drossel (20) enthält. Das Schalt element (19′) schaltet zwischen zwei ebenfalls parallelen, zu der Gleichstromversorgung führenden Leitungen, von denen eine einen einstellbaren Widerstand oder eine einstellbare Drossel (23) enthält.

Die in Fig. 4 dargestellte Stellung der Umschaltelemente (19, 21, 22) entspricht dem Betriebszustand während des Spinnens. Die Einzelmotoren (11 und 15) werden von der Frequenzsteuereinrichtung (16′) mit einem Wechselstrom einer vorgegebenen Frequenz gespeist. Das Umschaltelement (19″) ist auf die die Drossel (20) enthaltende Leitung geschaltet, so daß der Einzelmotor (15) eine "weiche" Drehmoment-Drehzahl-Kennlinie aufweist. Entsprechend ist das Umschaltelement (19′) auf die dem Widerstand oder die Drossel (23) enthaltende Leitung zu der Gleichstromversorgung geschaltet, so daß eine "weiche" Bremsung erhalten wird. Die Umschalteinrichtung (22) ist so geschaltet, daß der Einzelmotor (11) angetrieben wird. Das Umschaltelement (21) ist auf die zur Gleichstromversorgung führende Leitung geschaltet, so daß eine "weiche" Bremsung für den Einzelmotor (15) erhalten wird. Diese Schaltstellung des Umschaltelementes (21) wird eingeschaltet, wenn sich der Aufwindedurchmesser der Spule (10) von dem größten Durchmesser hin zu kleineren Durchmessern ändert. Wenn dann nach Erreichen des kleinsten Aufwindedurchmessern sich das Aufwindemoment wieder ändert, wird entsprechend das Umschaltelement (21) umgesteuert, so daß dann der Einzelmotor (15) "weich" angetrieben ist. Das Umschalten des Schaltelementes (21) wird beispielsweise abhängig von der Hubbewegung der Glocke (14) oder der Spindel (12) gesteuert, deren Bewegung den Aufwindedurchmesser und damit das Aufwindemoment bestimmt. In der Praxis wird vorgesehen, daß das Umschalten des Umschaltelementes (21) etwas phasenverschoben gegenüber den tatsächlichen Aufwindedurchmessern erfolgt, so daß damit Spannungsspitzen abgeschliffen werden können.

Um einen möglichst "steifen" Antrieb bei dem Anlaufen der Spinnvorrichtung für die Glocke (14) zu erreichen, wird das Schaltelement (19″) auf die die Drossel (20) umgehende Leitung geschaltet, so daß mit einer entsprechend "steifen" Drehmoment-Drehzahl-Kennlinie angetrieben wird. Um ein möglichst rasches Abbremsen bei dem Stillsetzen der Spinnvorrichtung zu erhalten, wird das Schaltelement (19′) entsprechend auf die den Widerstand oder die Drossel (23) umgehende Leitung geschaltet.

Die Drossel (20) und der Widerstand oder die Drossel (23) sind einstellbar, so daß sie auf vorgegebene Werte eingestellt werden können. In Abwandlung der dargestellten Ausführungsform wird vorgesehen, daß die Drossel (20) und/oder (23) mit einem Verstellelement versehen ist, das während des Antreibens der Glocke und/oder während des Bremsens der Glocke eine Anpassung des Drehmomentes und/oder des Bremsmomentes an den Geschwindigkeitsverlauf vornimmt. Der Verlauf der Glockendrehzahl (ng) ist in Fig. 2 nur schematisch dargestellt. In der Praxis verläuft die Drehzahl zwischen den Minima und den Maxima natürlich nicht gradlinig, so daß für einen möglichst weitgehenden Ausgleich eine entsprechende Anpassung über die Drosseln (20, 23) vorgenommen werden kann.

In Abwandlung der dargestellten Ausführungsform werden als Einzelmotoren (11) für die Spindeln (12) Synchronmotoren vorgesehen, so daß sich schon alleine aufgrund des Schlupfes des als Asynchronmotor ausgebildeten Einzelmotors (15) der Glocke (14) ein Drehzahlunterschied einstellt, der dann durch das Auslegen mit einer "weichen" Drehmoment-Kennlinie (DG) verstärkt wird.

**Patentansprüche**

1. Spinnvorrichtung mit einer eine Spule (10) aufnehmenden, von einem Einzelmotor (11) angetriebenen Spindel (12) und mit einer die Spule übergreifenden, über ihren unteren Rand das ersponnene Garn auf die Spule aufwindenden Glocke (14), die ebenfalls mit einem Einzelmotor (15) angetrieben ist, dadurch gekennzeichnet, daß die beiden Einzelmotoren (11, 15) an eine gemeinsame Frequenzsteuereinrichtung (16) angeschlossen sind, und daß die Drehmoment-Kennlinie (DG) des Einzelmotors (15) der Glocke (14), der ein Asynchronmotor ist, derart auf die Lastmoment-Kennlinie (LG) der Glocke (14) abgestimmt ist, daß bei gleicher Speisefrequenz für den Einzelmotor (11) der Spindel (12) und für den Einzelmotor (15) der Glocke (14) der Einzelmotor (15) der Glocke (14) mit einer Drehzahl angetrieben ist, die kleiner als die für den Aufwindevorgang des Garns (13) benötigte Drehzahl ist.

2. Spinnvorrichtung nach Anspruch 1, dadurch gekennzeichnet, daß Mittel vorgesehen sind, um die Drehmoment-Kennlinie (DG) des Einzelmotors (15) der Glocke (14) abhängig von den Aufwindeverhältnissen zu steuern.

3. Spinnvorrichtung nach Anspruch 1 oder 2, dadurch gekennzeichnet, daß der Einzelmotor (15) der Glocke (14) über eine Umschalteinrichtung (19) direkt oder über Mittel (20) zum Abstimmen der Drehmomenten-Kennlinie (DG) mit der Frequenzsteuereinrichtung (16') verbindbar ist.

4. Spinnvorrichtung nach einem der Ansprüche 1 bis 3, dadurch gekennzeichnet, daß zum Stillsetzen die Einzelmotoren (11, 15) der Spindel (12) und der Glocke (14) über Umschalteinrichtungen (21, 22) unter Umgehung der Frequenzsteuereinrichtung (16') an eine Gleichstromversorgung anschließbar sind.

5. Spinnvorrichtung, insbesondere nach Anspruch 1 oder einem der Ansprüche 2 bis 4, dadurch gekennzeichnet, daß die Glocke (14) mit einer periodisch einschaltbaren Bremseinrichtung (19', 21, 23) versehen ist.

6. Spinnvorrichtung nach Anspruch 5, dadurch gekennzeichnet, daß die Bremswirkung der Bremseinrichtung (19', 21, 23) veränderbar ist.

7. Spinnvorrichtung nach Anspruch 5 oder 6, dadurch gekennzeichnet, daß die Bremseinrichtung (19', 23) in Abhängigkeit von den Aufwindeverhältnissen ein- und ausschaltbar und/oder in ihrer Bremswirkung veränderbar ist.

8. Spinnvorrichtung nach Anspruch 5 oder 6, dadurch gekennzeichnet, daß die Bremseinrichtung (19', 21, 23) in einen Regelkreis eingebaut ist, der Mittel zum Erfassen der Fadenspannung enthält.

9. Spinnvorrichtung nach Anspruch 8, dadurch gekennzeichnet, daß die Bremseinrichtung (19', 21, 23) in Abhängigkeit von der Fadenspannung ein- und ausschaltbar und/oder in der Bremswirkung veränderbar ist.

10. Spinnvorrichtung nach Anspruch 5 oder 6, dadurch gekennzeichnet, daß die Bremseinrichtung (19', 21, 23) abhängig von einem vorher ermittelten und dann vorgegebenen Verlauf der Fadenspannung gesteuert ist.

11. Spinnvorrichtung nach einem der Ansprüche 1 bis 10, dadurch gekennzeichnet, daß der Einzelmotor (15) der Glocke (14) zum periodischen Bremsen an eine Gleichstromquelle anschließbar ist, wobei Mittel (23) zum Einstellen der Bremswirkung zwischenschaltbar sind.

**Claims**

1. Spinning device having a spindle (12) which accommodates a cop (10) and which is driven by a separate motor (11), and a bell (14), which embraces the cop and winds up the spun yarn on the cop over its lower end and which is likewise driven by a separate motor (15), characterized in that the two separate motors (11, 15) are connected to a common frequency control device (16) and that the torque characteristic (DG) of the separate motor (15) of the bell (14), which is of the asynchronous type, is adapted to the load torque characteristic (LG) of the bell (14) in such a way that when the input frequency is equal for the separate motor (11) of the spindle (12) and for the separate motor (15) of the bell (14), the separate motor (15) of the bell (14) is driven at a speed smaller than the speed required for the winding-up process of the yarn (13).

2. Spinning device according to claim 1, characterized in that means are provided for controlling the torque characteristic (DG) of the separate motor (15) of the bell (14) in response to the winding conditions.

3. Spinning device according to claim 1 or 2, characterized in that the separate motor (15) of the bell (14) can be connected to the frequency control device (16') by switching means (19) either directly or via means (20) for adapting the torque characteristic (DG).

4. Spinning device according to any of claims 1 to 3, characterized in that the separate motors (11, 15) of the spindle (12) and the bell (14) can be connected, for stopping, to a direct-current supply via switching means (21, 22) whereby the frequency control device (16') is by-passed.

5. Spinning device, in particular according to claim 1 or any of claims 2 to 4, characterized in that the bell (14) is provided with braking means (19′, 21, 23) which can be switched on periodically.

6. Spinning device according to claim 5, characterized in that the braking effect of the braking means (19′, 21, 23) can be varied.

7. Spinning device according to claim 5 or 6, characterized in that the braking means (19′, 21, 23) can be switched on and off and/or varied as regards its braking effect in response to the winding conditions.

8. Spinning device according to claim 5 or 6, characterized in that the braking means (19′, 21, 23) is integrated in a control circuit containing means for detecting the thread tension.

9. Spinning device according to claim 8, characterized in that the braking means (19′, 21, 23) can be switched on and off and/or varied as regards its braking effect in response to the thread tension.

10. Spinning device according to claim 5 or 6, characterized in that the braking means (19′, 21, 23) is controlled by a predetermined thread-tension curve which has been established in advance.

11. Spinning device according to any of claims 1 to 10, characterized in that the separate motor (15) of the bell (14) can be connected to a direct-current source for periodical braking, and means (23) can be inserted for adjusting the braking effect.


## Revendications

1. Dispositif de filature avec une broche (12) recueillant une canette (10) et entraînée par un moteur particulier (11) et une cloche (14) surplombant la canette, et renvidant par dessus son bord inférieur le fil filé sur la canette, et également entraînée par un moteur particulier (15), caractérisé en ce que les deux moteurs particuliers (11, 15) sont raccordés à un appareil de commande par fréquence commun (16) et que la courbe caractéristique de couple (DG) du moteur particulier (15) de la cloche (14), un moteur asynchrone, est accordé sur la ligne caractéristique du couple résistant (UG) de la cloche (14) de telle sorte qu'avec la même fréquence d'alimentation pour le moteur particulier (11) de la broche (12) et pour le moteur particulier (15) de la cloche (14), le moteur particulier (15) de la cloche (14) est entraîné à une vitesse qui est inférieure à la vitesse nécessaire pour le processus de renvidage du filé (13).

2. Dispositif de filature selon la revendication 1, caractérisé en ce que des moyens sont prévus pour asservir la courbe caractéristique de couple (DG) du moteur particulier (15) de la cloche (14) aux conditions de renvidage.

3. Dispositif de filature selon la revendication 1 ou 2, caractérisé en ce que le moteur particulier (15) de la cloche (14) peut être relié avec l'appareil de commande par fréquences (16′) directement ou à travers des moyens (20) pour l'asservissement de la courbe caractéristique de couple (DG).

4. Dispositif de filature selon l'une des revendications 1 à 3, caractérisé en ce que les moteurs particuliers (11, 15) de la broche (12) et de la cloche (14) peuvent, pour l'arrêt, être branchés sur une alimentation à courant continu à travers des renverseurs (21, 22) en éludant l'appareil de commande par fréquences (16′).

5. Dispositif de filature, essentiellement selon la revendication 1 ou l'une des revendications 2 à 4, caractérisé en ce que la cloche (14) est équipée d'un appareil de freinage (19′, 21, 23) enclenchable périodiquement.

6. Dispositif de filature selon la revendication 5, caractérisé en ce que l'action de freinage de l'appareil de freinage (19′, 21, 23) est modifiable.

7. Dispositif de filature selon la revendication 5 ou 6, caractérisé en ce que l'appareil de freinage (19′, 21, 23) est enclenchable est débranchable en fonction des conditions de renvidage et/ou modifiable dans son action de freinage.

8. Dispositif de filature selon la revendication 5 ou 6, caractérisé en ce que l'appareil de freinage (19′, 21, 23) est monté dans un circuit de réglage contenant des moyens pour la détection de la tension du fil.

9. Dispositif de filature selon la revendication 8, caractérisé en ce que l'appareil de freinage (19′, 21, 23) est enclenchable et débranchable en fonction de la tension du fil et/ou modifiable dans son action de freinage.

10. Dispositif de filature selon la revendication 5 ou 6, caractérisé en ce que l'appareil de freinage (19′, 21, 23) est piloté en fonction de l'allure de la tension du fil déterminée au préalable et ensuite prédéfinie.

11. Dispositif de filature selon l'une des revendications 1 à 10, caractérisé en ce que le moteur particulier (15) de la cloche (14) peut être branché sur une source de courant continu pour le freinage périodique, des moyens (23) pour le réglage de l'action de freinage étant interconnectables.

Fig. 1

Fig. 2

Fig. 3

Fig. 4